# FASCICULE DE BREVET EUROPEEN

(11) **EP 4 006 957 B1**
(45) Date de publication et mention de la délivrance du brevet: **23.10.2024**
(21) Numéro de dépôt: 21210675.1
(22) Date de dépôt: 26.11.2021
(51) Int. Cl.: H01L 21/3213, H01L 21/768

(54) **PROCÉDÉ POUR AUGMENTER LA RUGOSITÉ DE SURFACE D'UNE COUCHE MÉTALLIQUE**
VERFAHREN ZUM STEIGERN DER OBERLÄCHENRAUHIGKEIT EINER METALLSCHICHT
METHOD FOR INCREASING THE SURFACE ROUGHNESS OF A METAL LAYER

(30) Priorité: 27.11.2020 FR 2012280
(43) Date de publication de la demande: 01.06.2022
(73) Titulaire: Commissariat à l'Energie Atomique et aux Energies Alternatives, 75015 Paris (FR)
(72) Inventeur: POLLET, Olivier, 38054 GRENOBLE CEDEX 09 (FR); GRENOUILLET, Laurent, 38054 GRENOBLE CEDEX 09 (FR); POSSEME, Nicolas, 38054 GRENOBLE CEDEX 09 (FR)
(74) Mandataire: Cabinet Camus Lebkiri

(56) Documents cités:
- WO-A1-00/49651
- WO-A1-2015/186064
- WO-A1-2016/062613
- FR-A1- 3 000 602
- US-A1- 2015 236 136

## Description

### DOMAINE TECHNIQUE

La présente invention concerne un procédé pour augmenter la rugosité de surface d'une couche métallique et son application lors de la fabrication d'une cellule mémoire résistive ou lors de la formation d'un via entre deux lignes métalliques.

### ÉTAT DE LA TECHNIQUE

Dans un dispositif électronique de type métal-isolant-métal (MIM) comme un condensateur ou une cellule de mémoire résistive, la rugosité de surface des couches métalliques formant les électrodes peut avoir un impact significatif sur les propriétés électriques du dispositif.

Les documents WO 00/49651, US 2015/236136, WO 2015/186064, WO 2016/062613 et FR 3 000 602 décrivent modifier la rugosité de surface de couches métalliques.

Par exemple, dans une cellule de mémoire résistive à base d'oxyde (OxRAM, pour « Oxide-based Random Access Memory » en anglais) comprenant une électrode inférieure, une électrode supérieure et un matériau actif de résistance électrique variable disposé entre les électrodes, la rugosité de l'électrode inférieure influe sur la tension dite de forming de la cellule mémoire. La tension de forming d'une cellule OxRAM est la valeur de tension à laquelle la cellule mémoire bascule d'un état vierge, caractérisé par une résistance (dite initiale) très élevée, à un état faiblement résistif. La tension de forming est supérieure à la tension nominale de fonctionnement de la cellule mémoire, qui permet d'effacer ou d'écrire la cellule mémoire (passage de l'état faiblement résistif à un état fortement résistif, ou inversement).

Dans l'article [« Impact of roughness of TiN bottom electrode on the forming voltage of HfO2 based résistive memories », Microelectronic Engineering, 2020, vol. 221, p. 111194], C. Charpin-Nicolle et al. montrent qu'augmenter la rugosité de l'électrode inférieure en nitrure de titane (TiN) a pour effet de diminuer la tension de forming de la cellule mémoire. Une tension de forming plus faible est avantageuse, car elle permet de réduire la taille du circuit mémoire (transistors de sélection, circuit générateur de tensions) et d'améliorer l'endurance des cellules mémoire.

L'électrode inférieure en TiN est rendue plus rugueuse par exposition à un plasma de gravure ionique réactive (aussi appelée RIE, pour « Reactive-lon Etching » en anglais). Différentes chimies de plasma associées chacune à des conditions particulières de gravure ont permis de faire varier la rugosité de surface en valeur moyenne quadratique de 0,4 nm à 14 nm.

L'augmentation de la rugosité par RIE nécessite cependant de développer une recette spécifique pour chaque matériau d'électrode, en jouant sur les nombreux paramètres de procédé (mélange de gaz réactifs et concentrations, pression, puissances RF, températures...). Cependant, pour certains métaux, il s'avère impossible de générer de la rugosité par RIE, aucun jeu de paramètres ne permettant d'activer un mécanisme de gravure aléatoire et non-uniforme. Enfin, d'autres métaux ne peuvent pas être gravés par RIE (car ils ne produisent pas de sous-espèces volatiles), mais uniquement par gravure par faisceau d'ions (ou IBE, pour « Ion Beam Etching » en anglais). Or par nature la gravure par faisceau d'ions n'est pas une technique permettant d'augmenter la rugosité.

### RÉSUMÉ DE L'INVENTION

Il existe donc un besoin de prévoir un procédé pour augmenter la rugosité de surface d'une couche métallique, qui soit applicable à tous les métaux.

Selon un premier aspect de l'invention, on tend à satisfaire ce besoin en prévoyant un procédé dit « de rugosification » comprenant les étapes suivantes :
- déposer sur la couche métallique une couche sacrificielle en un matériau diélectrique comprenant de l'azote ;
- exposer une surface de la couche sacrificielle à un plasma de gravure de façon à créer des aspérités ;
- graver la couche métallique à travers la couche sacrificielle, de façon à transférer les aspérités de la couche sacrificielle dans une partie au moins de la couche métallique.

Ce procédé de rugosification permet d'augmenter la rugosité d'une couche métallique, quel que soit le matériau qui la constitue, sans avoir besoin de développer une recette de gravure plasma spécifique à chaque métal, car la rugosité est générée dans la couche sacrificielle en matériau diélectrique. Il est applicable à tous les métaux, car toutes les techniques de gravure d'un métal (IBE, RIE...) peuvent être utilisées pour transférer les aspérités de la couche sacrificielle dans la couche métallique. En particulier, le procédé de rugosification selon l'invention est applicable aux métaux nobles et leurs alliages (qui ne peuvent être gravés que par un faisceau d'ions), contrairement au procédé de rugosification de l'art antérieur.

Le matériau diélectrique comprenant de l'azote peut être choisi parmi les nitrures de silicium (SiₓN_{y}), le carbonitrure de silicium (SiCN) et le carbonitrure de bore et de silicium (SiBCN).

De préférence, le plasma de gravure est formé à partir d'un mélange de gaz réactifs comprenant un gaz contenant de l'oxygène, un gaz contenant du silicium et du fluor ou du silicium et du chlore et un gaz fluorocarboné (CₓF_{y}), éventuellement hydrogéné (CₓH_{y}F_{z}).

Par exemple, le gaz contenant de l'oxygène est O₂, le gaz contenant du silicium et du fluor ou du silicium et du chlore est SiCl₄ ou SiF₄ et le gaz fluorocarboné hydrogéné est CH₃F.

Dans un mode de mise en oeuvre particulier du procédé de rugosification, le matériau diélectrique est un nitrure de silicium (SiₓN_{y}) et le plasma de gravure est généré dans une chambre d'un réacteur de gravure ionique réactive dans les conditions suivantes :
- un débit de SiCl₄ ou SiF₄ entrant dans la chambre du réacteur compris entre 2 sccm et 5 sccm ;
- un débit de O₂ entrant dans la chambre du réacteur compris entre 40 sccm et 250 sccm ;
- un débit de CH₃F entrant dans la chambre du réacteur compris entre 40 sccm et 250 sccm ;
- une puissance émise par une source du réacteur comprise entre 100 W et 1000 W ;
- une tension de polarisation comprise entre -200 V et -500 V ;
- une pression dans la chambre du réacteur comprise entre 6,666 Pa et 19,998 Pa ;
- une température de porte-substrat comprise entre 20 °C et 100 °C ; et
- une température des parois de la chambre du réacteur comprise entre 50 °C et 80 °C.

Le procédé de rugosification peut comprendre en outre, après l'étape de gravure de la couche métallique, une étape de retrait sélectif de la couche sacrificielle. Alternativement, la couche sacrificielle peut être entièrement consommée lors de l'étape de gravure de la couche métallique.

Le procédé selon le premier aspect de l'invention peut également présenter une ou plusieurs des caractéristiques ci-dessous, considérées individuellement ou selon toutes les combinaisons techniquement possibles :
- la couche sacrificielle présente après l'étape d'exposition au plasma de gravure une rugosité de surface, exprimée en valeur moyenne quadratique, supérieure ou égale à 10 nm, et de préférence comprise entre 10 nm et 30 nm ;
- la couche métallique présente initialement une rugosité de surface, exprimée en valeur moyenne quadratique, strictement inférieure à 1nm ;
- la couche métallique est gravée au moyen d'un procédé de gravure ayant une sélectivité par rapport à la couche sacrificielle comprise entre 1 et 2 ou strictement supérieure à 2.

Un deuxième aspect de l'invention concerne un procédé de fabrication d'une cellule mémoire résistive comprenant une première électrode, une deuxième électrode et une couche résistive disposée entre les première et deuxième électrodes, le procédé comprenant les étapes suivantes :
- déposer une première couche métallique sur un substrat ;
- augmenter la rugosité de la première couche métallique au moyen d'un procédé selon le premier aspect de l'invention ;
- déposer une couche de matériau à résistance électrique variable sur la première couche métallique et une deuxième couche métallique sur la couche de matériau à résistance électrique variable ;
- graver la première couche métallique, la couche de matériau à résistance électrique variable et la deuxième couche métallique, de façon à délimiter respectivement la première électrode, la couche résistive et la deuxième électrode de la cellule mémoire résistive.

Un troisième aspect de l'invention concerne un procédé de formation d'un via s'étendant jusqu'à une couche barrière métallique, le procédé comprenant les étapes suivantes :
- déposer une première couche diélectrique sur la couche barrière métallique, la première couche diélectrique étant constituée d'un matériau comprenant de l'azote ;
- déposer une deuxième couche diélectrique sur la première couche diélectrique ;
- former dans la deuxième couche diélectrique une cavité débouchant sur la première couche diélectrique ;
- exposer au fond de la cavité une surface de la première couche diélectrique à un plasma de gravure de façon à créer des aspérités ;
- graver la couche barrière métallique à travers la première couche diélectrique, de façon à transférer les aspérités de la première couche diélectrique dans une partie au moins de la couche barrière métallique ; et
- remplir la cavité d'au moins un métal.

Un quatrième aspect de l'invention concerne un procédé pour augmenter la rugosité de surface d'une couche diélectrique en un nitrure de silicium (SiₓN_{y}), le procédé comprenant une étape d'exposition de la couche sacrificielle à un plasma de gravure, le plasma de gravure étant formé à partir d'un mélange de gaz réactifs comprenant un gaz contenant de l'oxygène, un gaz contenant du silicium et du fluor ou du silicium et du chlore et un gaz fluorocarboné (CₓF_{y}), éventuellement hydrogéné (CₓH_{y}F_{z}).

### BRÈVE DESCRIPTION DES FIGURES

D'autres caractéristiques et avantages de l'invention ressortiront clairement de la description qui en est donnée ci-dessous, à titre indicatif et nullement limitatif, en référence aux figures suivantes.
[Fig. 1A], [Fig. 1B], [Fig. 1C] et [Fig. 1D] représentent des étapes d'un procédé pour augmenter la rugosité de surface d'une couche métallique ;
[Fig. 2A], [Fig. 2B] et [Fig. 2C] représentent des étapes d'un procédé de fabrication d'une cellule mémoire résistive, dans lequel le procédé des figures 1A-1D est mis en oeuvre ;
[Fig. 3A], [Fig. 3B] et [Fig. 3C] représentent des étapes d'un procédé de formation d'un via, dans lequel le procédé des figures 1A-1D est mis en oeuvre.

Pour plus de clarté, les éléments identiques ou similaires sont repérés par des signes de référence identiques sur l'ensemble des figures.

### DESCRIPTION DÉTAILLÉE

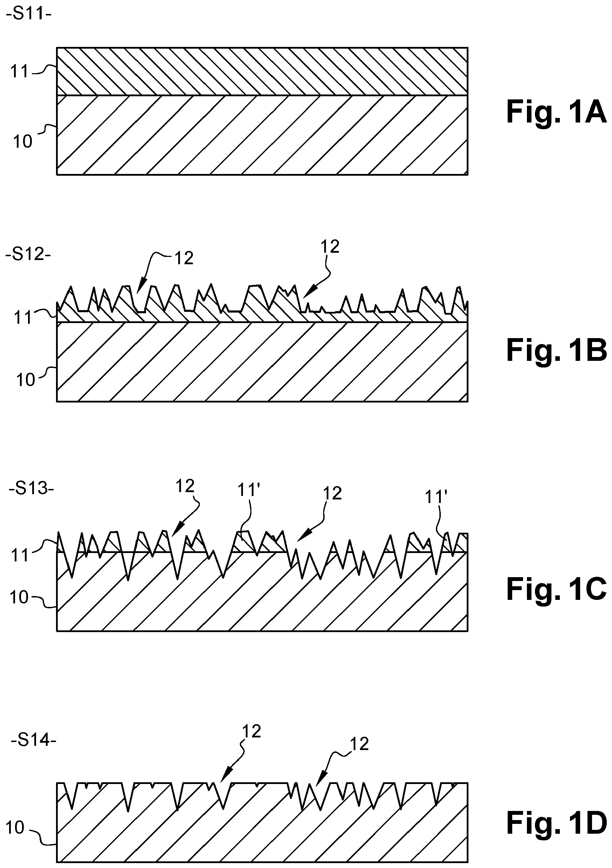

Les figures 1A à 1C représentent schématiquement des étapes S11 à S13 d'un procédé pour augmenter la rugosité d'une couche métallique 10. Par couche métallique, on entend une couche formée d'un matériau dont les atomes sont unis par des liaisons métalliques. Ce matériau (un métal) peut être
- un corps simple, tel que le titane (Ti), le tantale (Ta), le platine (Pt), l'or (Au) ou le ruthénium (Ru) ;
- un alliage de plusieurs éléments métalliques, par exemple un alliage aluminium cuivre (AICu) ;
- un alliage d'un élément métallique avec un élément non-métallique, tel qu'un siliciure métallique (ex. AISi), un nitrure métallique (ex. TiN, TaN) ou un carbure métallique.

La couche métallique 10 peut être disposée sur un substrat (non représenté), par exemple en silicium. Elle est par exemple formée par dépôt physique en phase vapeur (ou PVD, pour « Physical Vapor Déposition » en anglais). Son épaisseur est de préférence supérieure ou égale à 100 nm.

La couche métallique 10 présente initialement (c.-à-d. immédiatement après son dépôt) une rugosité de surface strictement inférieure à 1 nm. Cette valeur de rugosité, ainsi que toutes celles données par la suite, sont exprimées en valeur moyenne quadratique. La rugosité moyenne quadratique (notée Rq) est déterminée par une analyse statistique d'une image de microscope à force atomique, en prenant comme échantillon une surface de 5x5 µm².

En référence à la figure 1A, le procédé d'augmentation de la rugosité, aussi appelé procédé de rugosification, comprend une première étape S11 de dépôt d'une couche sacrificielle 11 sur la couche métallique 10. La couche sacrificielle 11, aussi appelée couche de transfert ou couche de masque dur, est formée d'un matériau diélectrique comprenant de l'azote. De préférence, le matériau diélectrique présente un taux d'azote compris entre 20 % et 50 %. A titre d'exemple, le matériau diélectrique est choisi parmi les nitrures de silicium (SiₓN_{y} ; toutes les stoechiométries sont possibles), le carbonitrure de silicium (SiCN) et le carbonitrure de bore et de silicium (SiBCN).

La couche sacrificielle 11 est par exemple formée par dépôt chimique en phase vapeur assisté par plasma (ou PECVD, pour « Plasma-Enhanced Chemical Vapor Déposition » en anglais).

L'étape suivante S12, représentée par la figure 1B, consiste à exposer la surface de la couche sacrificielle 11 à un plasma de gravure de façon à générer des aspérités 12. Les aspérités 12 sont des motifs en saillie ayant une forme aléatoire et répartis de manière non uniforme à la surface de la couche sacrificielle 11. Ces motifs sont obtenus en gravant partiellement la couche sacrificielle 11, par un effet de micro-masquage (dépôt d'une partie des ions du plasma sous forme d'une couche de polymère d'épaisseur variable et gravure simultanée de la couche diélectrique et de la couche polymère, la couche diélectrique et de la couche polymère ayant des vitesses de gravure différentes).

La formation des aspérités 12 a pour effet d'augmenter la rugosité de surface de la couche sacrificielle 11, passant par exemple d'une valeur initiale de l'ordre de 1 nm à une valeur finale supérieure ou égale à 10 nm, et de préférence comprise entre 10 nm et 30 nm (bornes incluses).

L'étape S12 d'exposition de la couche sacrificielle 11 est de préférence accomplie dans un réacteur de gravure ionique réactive, par exemple à couplage inductif (ICP, « Inductive Coupled Plasma »). Le réacteur comprend notamment une chambre dans laquelle est généré le plasma de gravure, une antenne radiofréquence (RF) appelée « générateur source » et un porte-substrat appelé « générateur bias », sur lequel est disposé le substrat (recouvert de la couche métallique 10 et de la couche sacrificielle 11). Le porte-substrat permet d'appliquer une polarisation RF au substrat.

Le plasma de gravure est formé à partir d'un mélange de gaz réactifs introduits dans la chambre du réacteur. Le mélange de gaz réactifs comprend de préférence un gaz contenant de l'oxygène, un gaz contenant du silicium et du fluor ou du silicium et du chlore et un gaz fluorocarboné (CₓF_{y}), qui peut être hydrogéné (CₓH_{y}F_{z}). Un gaz neutre dit de dilution, tel que l'argon ou l'hélium, peut être également introduit dans la chambre du réacteur afin de rendre le plasma moins réactif, en augmentant l'aspect physique de la gravure (bombardement).

Le rapport du débit de gaz contenant de l'oxygène sur le débit de gaz contenant du silicium et du fluor ou du chlore est de préférence compris entre 20 et 50. Le rapport du débit de gaz fluorocarboné hydrogéné sur le débit de gaz contenant de l'oxygène est de préférence compris entre 0,9 et 1,1.

A titre d'exemple, le gaz réactif contenant de l'oxygène est le dioxygène (O₂), le gaz réactif contenant du silicium et du fluor ou du chlore est le tétrachlorure de silicium (SiCl₄) ou le tétrafluorure de silicium (SiF₄) et le gaz réactif fluorocarboné hydrogéné est le fluorométhane (CH₃F).

D'une manière générale, plus le matériau diélectrique de la couche sacrificielle 11 contient de l'azote, plus le mélange de gaz réactifs peut contenir de l'oxygène (en augmentant par exemple le ratio débit O₂ / débit SiCl₄ ou SiF₄).

Dans un mode de mise en oeuvre particulier du procédé de rugosification, le matériau diélectrique est un nitrure de silicium (SiₓN_{y}), tel que le nitrure de silicium stoechiométrique Si₃N₄, et le plasma de gravure est généré dans les conditions suivantes :
- un débit de SiCl₄ ou SiF₄ compris entre 2 sccm et 5 sccm (abréviation de « Standard Cubic Centimeter per Minute » en anglais, soit le nombre de cm³ de gaz s'écoulant par minute dans les conditions standard de pression et de température, i.e. à une température de 0 °C et une pression de 1013,25 hPa) ;

- un débit de O₂ compris entre 40 sccm et 250 sccm ;
- un débit de CH₃F compris entre 40 sccm et 250 sccm ;
- une puissance émise par la source du réacteur comprise entre 100 W et 1000 W ;
- une tension de polarisation du substrat comprise entre -200 V et -500 V ;
- une pression dans la chambre du réacteur comprise entre 6,666 Pa (50 mTorr) et 19,998 Pa (150 mTorr) ;
- une température de porte-substrat comprise entre 20 °C et 100 °C ; et
- une température des parois de la chambre du réacteur comprise entre 50 °C et 80 °C.

Par exemple, le débit de SiCl₄ ou SiF₄ est de 5 sccm, le débit d'oxygène est de 200 sccm, le débit de CH₃F est de 200 sccm, la puissance source est de 400 W, la tension de polarisation du substrat est de -250 V, la pression dans la chambre du réacteur est de 11,999 Pa (90 mTorr), la température du substrat est de 50 °C et de l'hélium est en outre introduit dans le réacteur (débit : 120 sccm).

La durée d'exposition de la couche sacrificielle 11 au plasma de gravure est déterminée en fonction de la rugosité de surface qu'on cherche à obtenir à l'issue de l'étape S12. Pour les plages de paramètre décrits précédemment, elle est typiquement comprise entre 30 s et 300 s.

L'épaisseur initiale (c.-à-d. avant gravure) de la couche sacrificielle 11 est avantageusement supérieure ou égale à la rugosité de surface souhaitée (en valeur moyenne quadratique).

A l'issue de l'étape d'exposition S12, la couche sacrificielle 11 peut encore recouvrir entièrement la couche métallique 10, comme cela est illustré par la figure 1B. Alternativement, une partie de la couche métallique 10 peut avoir été découverte.

A l'étape S13 de la figure 1C, la couche métallique 10 est gravée à travers la couche sacrificielle 11 de manière à transférer les aspérités 12 de la couche sacrificielle 11 dans une partie au moins de la couche métallique 10. Autrement dit, la couche sacrificielle 11 est utilisée comme un masque dur pour graver la couche métallique 10.

Lorsque la couche sacrificielle 11 recouvre entièrement la couche métallique 10, la couche sacrificielle 11 est d'abord consommée jusqu'à déboucher sur une partie de la couche métallique 10, puis des portions de la couche métallique 10 sont gravées en même temps que la couche sacrificielle 11. La gravure de la couche métallique 10 ne démarre donc pas au même instant selon les régions de la surface de la couche métallique 10, ce qui conduit à la formation d'aspérités en surface. Des portions de la couche métallique 10 peuvent ne pas être gravées si le masque dur formé par la couche sacrificielle 11 est suffisamment épais au-dessus de ces portions ou que le temps de gravure est limité. Ces portions sont alors recouvertes par des résidus 11' de la couche sacrificielle 11 à l'issue de l'étape de transfert S13, comme représenté par la figure 1C.

La gravure de la couche métallique 10 peut être accomplie au moyen de toute technique connue de l'homme du métier : gravure ionique réactive (RIE), gravure par faisceau d'ions (IBE)... La couche métallique 10 peut être gravée à l'étape de transfert S13 au moyen d'un procédé de gravure peu sélectif par rapport à la couche sacrificielle 11, c'est-à-dire ayant une sélectivité comprise entre 1 et 2 (bornes comprises). Dans ce cas, les aspérités 12 de la couche sacrificielle 11 sont transférées dans la couche métallique 10 sensiblement à l'identique. La gravure par faisceau d'ions est un exemple de procédé non sélectif (sélectivité égale à 1) et la gravure ionique réactive avec un plasma à base de chlore ou du fluor est un exemple de procédé peu sélectif (sélectivité inférieure ou égale à 2).

A l'inverse, en utilisant un procédé de gravure ayant une sélectivité strictement supérieure à 2, la taille des aspérités 12 est augmentée lors du transfert de la couche sacrificielle 11 à la couche métallique 10.

Ainsi, la rugosité finale de la couche métallique 10 peut être modulée en jouant sur la sélectivité du procédé de gravure de la couche métallique.

Un avantage du procédé de rugosification des figures 1A-1C est de pouvoir utiliser le même matériau diélectrique pour former la couche sacrificielle 11, quel que soit le matériau de la couche métallique 10 sous-jacente, et donc de n'avoir qu'une seule recette de gravure plasma (au lieu d'avoir autant de recettes que de métaux). Le procédé de rugosification est applicable à tous les métaux, étant donné que tous les techniques de gravure connues de l'homme du métier (pour graver une couche métallique) peuvent être utilisées pour transférer la rugosité de la couche sacrificielle 11 à la couche métallique 10.

Par exemple, la gravure des métaux Ti, Ta, TaN, AlCu et AISi est possible par RIE en utilisant une chimie à base de chlore ou de fluor, tandis que la gravure des métaux nobles comme Pt, Au et Ru est accomplie par IBE. La gravure par faisceau d'ions étant par nature non sélective par rapport au matériau diélectrique, les aspérités sont transférées sensiblement à l'identique dans une couche de métal noble.

La figure 1D représente une étape supplémentaire S14 du procédé de rugosification, pouvant être accomplie après l'étape S13 de la figure 1C. Lorsque la couche sacrificielle 11 n'est pas complètement consommée à l'issue de l'étape de transfert S13, la couche sacrificielle 11 peut être retirée sélectivement par rapport à la couche métallique 10. Cette étape S14 de retrait sélective est avantageusement accomplie par gravure humide, par exemple au moyen d'une solution d'acide fluorhydrique (HF).

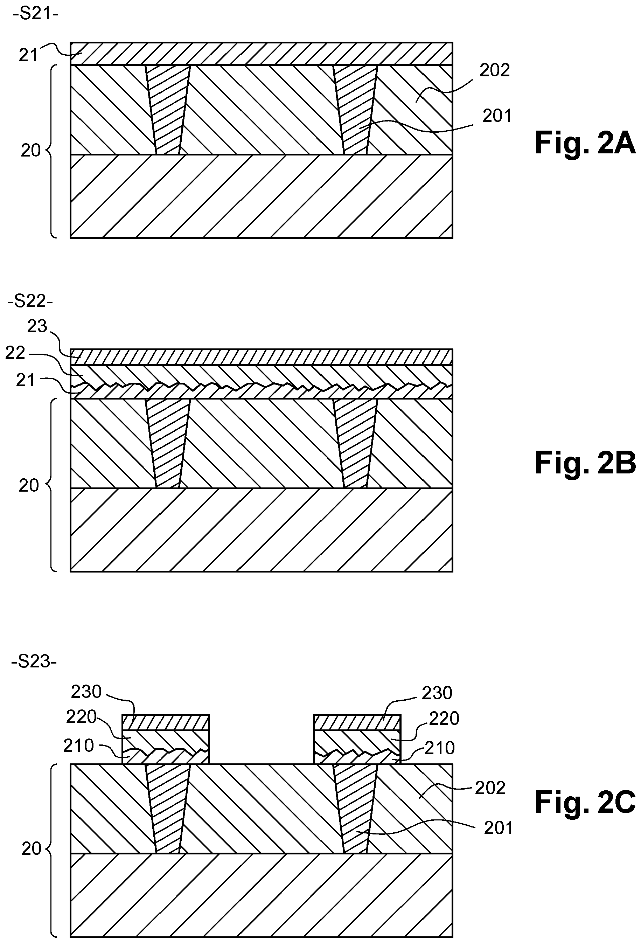

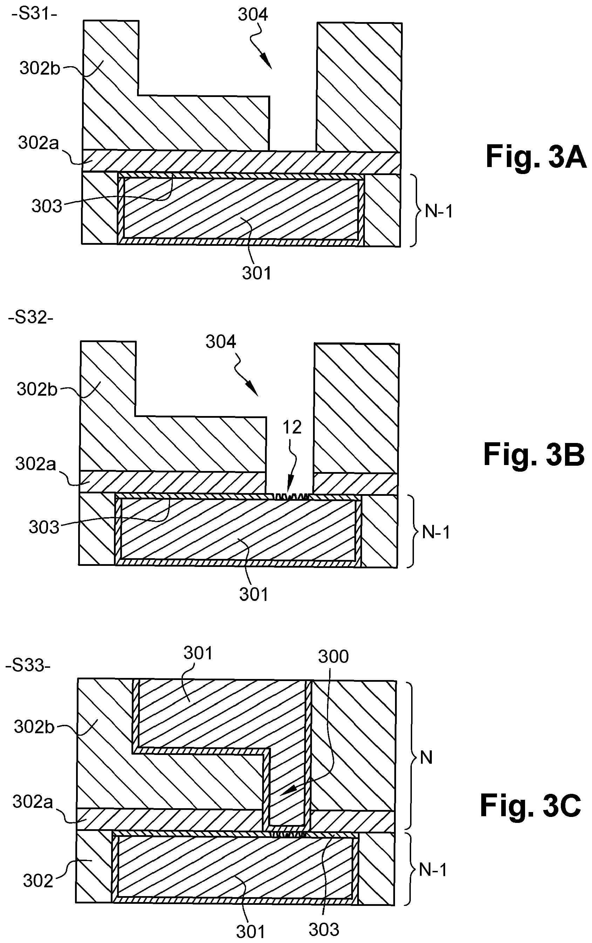

Deux exemples d'application du procédé de rugosification vont maintenant être décrits en relation avec les figures 2A-2C et les figures 3A-3C.

Le premier exemple d'application concerne un procédé de fabrication d'une cellule de mémoire résistive, par exemple de type OxRAM. Une cellule mémoire résistive comprend classiquement une première électrode dite électrode inférieure, une deuxième électrode dite électrode supérieure, et une couche résistive (aussi appelée couche active) disposée entre les électrodes inférieure et supérieure. La couche résistive est formée d'un matériau à résistance électrique variable, un oxyde dans le cas d'une cellule OxRAM.

Les figures 2A à 2C représentent schématiquement des étapes S21 à S23 de ce procédé de fabrication de cellule mémoire résistive.

L'étape S21 de la figure 2A consiste à déposer une première couche métallique 21 sur un substrat 20. Par exemple, la première couche métallique 21 est formée de nitrure de titane (TiN) et son épaisseur est comprise entre 100 nm et 150 nm.

Le substrat 20 peut notamment comporter des composants actifs (ex. transistors), reliés en eux par un ou plusieurs niveaux d'interconnexion (ou niveaux de métal) pour former un circuit logique CMOS (typiquement un circuit de lecture). Chaque niveau d'interconnexion comprend des via métalliques et/ou des lignes métalliques 201 enrobés dans une ou plusieurs couches diélectriques 202.

La première couche métallique 21 est déposée sur un niveau d'interconnexion (par exemple le premier niveau de métal M1) de façon à être en contact avec les lignes métalliques 201 de ce niveau. Ainsi, dans cet exemple, la cellule mémoire est formée au sein du bloc fonctionnel BEOL (« Back End Of Line » en anglais) d'un circuit CMOS.

La rugosité de surface de la première couche métallique 21 est ensuite augmentée au moyen du procédé de rugosification décrit en relation avec les figures 1A-1C (et 1D, le cas échéant). La rugosité de surface finale de la première couche métallique 21 est avantageusement supérieure ou égale à 2 nm, de préférence comprise entre 3 nm et 15 nm, afin de diminuer de façon significative la tension de forming de la cellule mémoire.

A l'étape S22 de la figure 2B, une couche de matériau à résistance électrique variable 22 est ensuite déposée sur la première couche métallique 21, puis une deuxième couche métallique 23 est déposée sur la couche de matériau à résistance électrique variable 22. Le matériau à résistance électrique variable peut être un oxyde, de préférence un oxyde de métal de transition tel que l'oxyde d'hafnium (HfO₂). La deuxième couche métallique 22 est par exemple formée de nitrure de titane (TiN). L'épaisseur de la couche de matériau à résistance électrique variable 22 peut être comprise entre 5 nm et 20 nm et l'épaisseur de la deuxième couche métallique 22 comprise entre 100 nm et 150 nm.

Enfin, à l'étape S23 de la figure 2C, la première couche métallique 21, la couche de matériau à résistance électrique variable 22 et la deuxième couche métallique 23 sont gravées de sorte à délimiter respectivement l'électrode inférieure 210, la couche résistive 220 et l'électrode supérieure 230 de la cellule mémoire résistive. La gravure peut être réalisée par RIE à travers un masque dur ou en résine, formé par photolithographie et retiré après la gravure. La gravure de l'électrode inférieure (ex. TiN) par RIE peut être sélective par rapport à la couche diélectrique 202 (ex. SiO₂) du niveau d'interconnexion, de sorte qu'il n'y ait pas de transfert de rugosité dans cette couche diélectrique 202.

Plusieurs cellules mémoire (comprenant chacun un empilement électrode inférieure 210 - couche résistive 220 - électrode supérieure 230) peuvent être formées simultanément à l'étape de gravure S3, comme cela est illustré par la figure 2C. L'électrode inférieure 210 de chaque cellule mémoire est en contact avec une ligne métallique 201 du niveau d'interconnexion.

Un deuxième exemple d'application du procédé de rugosification concerne un procédé de formation d'un via à résistance électrique aléatoire.

En référence à la figure 3C, un via 300 est un plot en métal reliant électriquement deux lignes métalliques 301 appartenant à deux niveaux d'interconnexion (c.-à-d. deux niveaux de métal) consécutifs d'un circuit intégré. Ces deux niveaux d'interconnexion sont appelés ci-après niveaux N et N-1. La ligne métallique 301 du niveau N-1 (comme éventuellement celle du niveau N) peut être recouverte d'une couche barrière 303, empêchant la diffusion du métal de ligne dans la ou les couches diélectriques 302a-302b des niveaux d'interconnexion supérieurs, en particulier celles du niveau N. Cette barrière de diffusion 303 peut être en métal, par exemple en alliage de cobalt et tungstène dopé au phosphore (CoWP) ou au bore (CoWB), et auto-alignée sur la ligne métallique 301 (dépôt sélectif, uniquement localisé sur la ligne métallique).

Le via 300 s'étend de la ligne métallique 301 du niveau au N jusqu'à la couche barrière métallique 303 recouvrant la ligne métallique 301 du niveau N-1. Sa résistance électrique dépend notamment de l'état de surface de la couche barrière métallique 303.

Le procédé de rugosification est appliqué dans ce contexte pour augmenter la rugosité de la couche barrière métallique 303, afin de conférer au via 300 une résistance électrique aléatoire. Des via à résistance électrique aléatoire permettent de construire un circuit intégré doté d'une fonction inclonable physique (ou PUF, pour « Physical Unclonable Function » en anglais). Une fonction inclonable physique est une signature ou une empreinte numérique, unique et infalsifiable, qui sert à identifier le circuit intégré. Un tel circuit intégré trouve de nombreuses applications en cryptographie.

Les figures 3A à 3C représentent schématiquement des étapes S31 à S33 du procédé de formation d'un via 300 présentant une résistance électrique aléatoire.

A l'étape S31 de la figure 3A, une première couche diélectrique 302a est déposée sur la couche barrière métallique 303, puis une deuxième couche diélectrique 302b est déposée sur la première couche diélectrique 302a.

La première couche diélectrique 302a est destinée à servir de couche sacrificielle (ou de couche de masque dur) lors du procédé de rugosification de la couche barrière métallique 303. Elle est donc constituée d'un matériau diélectrique comprenant de l'azote, par exemple le Si₃N₄ ou le SiCN.

La deuxième couche diélectrique 302b est de préférence formé d'un matériau diélectrique ayant une faible constante diélectrique (aussi appelé matériau diélectrique *low-k*)*.* A titre d'exemple, la deuxième couche diélectrique 302b est en SiOC.

Puis, la deuxième couche diélectrique 302b est gravée de façon à former une cavité 304, la première couche diélectrique 302a servant avantageusement de couche d'arrêt à la gravure de la deuxième couche diélectrique 302b. La cavité 304 débouche sur la première couche diélectrique 302a (autrement dit, le fond de la cavité 304 est formé par la première couche diélectrique 302a). La cavité 304 peut être conformée de sorte à réaliser simultanément le via et de la ligne métallique du niveau N, conformément à un procédé d'intégration « Double Damascene » classique.

L'étape S32 de la figure 3B comprend les étapes S12, S13 et éventuellement S14 du procédé de rugosification. Celles-ci sont accomplies de la façon décrite en relation avec les figures 1B, 1C et 1D.

Une surface de la première couche diélectrique 302a, située au fond de la cavité 304, est exposée à un plasma de gravure (par exemple CH₃F/SiCl₄/O₂) de façon à créer des aspérités (étape S12).

Puis, la couche barrière métallique 303 est gravée à travers la première couche diélectrique 302a, de façon à transférer les aspérités de la première couche diélectrique 202a dans la couche barrière métallique 303 (étape S13). La gravure de la couche barrière métallique 303 peut déboucher partiellement sur la ligne métallique 301 du niveau N-1. Un procédé de gravure ayant une sélectivité (par rapport à la première couche diélectrique 302a) comprise entre 1 et 2 peut être privilégié pour avoir un meilleur contrôle, et notamment éviter de graver trop en profondeur la ligne métallique 301.

Les éventuels résidus de la première couche diélectrique 302a sont ensuite gravés sélectivement par rapport aux couches métalliques sous-jacentes (étape S14).

Enfin, à l'étape S33 de la figure 3C, la cavité 304 est remplie d'un ou plusieurs métaux afin de former le via 300 et, de préférence simultanément, la couche métallique 301 du niveau N. L'étape S33 peut comporter successivement le dépôt d'une barrière de diffusion métallique (par exemple en Ta/TaN) sur les parois de la cavité 304, le dépôt d'une couche de germination (typiquement en cuivre) sur la barrière de diffusion métallique et le remplissage du reste de la cavité par un métal (typiquement du cuivre) par dépôt électrochimique.

La rugosité aléatoire de la couche barrière métallique 303 au niveau du via 300, ainsi que son ouverture plus ou moins prononcée sur la ligne métallique 301 du niveau N-1, confère au via 300 une résistance électrique aléatoire qui peut mesurée par un circuit de lecture.

Le procédé de rugosification des figures 1A-1D est ici intégré à un procédé de formation simultanée d'un via et d'une ligne métallique (procédé double damascène). Toutefois, il peut tout aussi bien être intégré à un procédé de formation d'un via seul (procédé damascène simple).

## Revendications

1. Procédé pour augmenter la rugosité de surface d'une couche métallique (10), comprenant les étapes suivantes :
- déposer (S11) sur la couche métallique (10) une couche sacrificielle (11) en un matériau diélectrique comprenant de l'azote ;
- exposer (S12) une surface de la couche sacrificielle (11) à un plasma de gravure de façon à créer des aspérités (12), le plasma de gravure étant formé à partir d'un mélange de gaz réactifs comprenant un gaz contenant de l'oxygène, un gaz contenant du silicium et du fluor ou du silicium et du chlore et un gaz fluorocarboné (CₓF_{y}) ;
- graver (S13) la couche métallique (10) à travers la couche sacrificielle (11), de façon à transférer les aspérités (12) de la couche sacrificielle dans une partie au moins de la couche métallique.

2. Procédé selon la revendication 1, dans lequel les aspérités (12) sont des motifs en saillie ayant une forme aléatoire et répartis de manière non uniforme à la surface de la couche sacrificielle (11).

3. Procédé selon l'une des revendications 1 et 2, dans lequel le matériau diélectrique comprenant de l'azote est choisi parmi les nitrures de silicium (SiₓN_{y}), le carbonitrure de silicium (SiCN) et le carbonitrure de bore et de silicium (SiBCN).

4. Procédé selon l'une quelconque des revendications 1 à 3, dans lequel le gaz contenant de l'oxygène est O₂, le gaz contenant du silicium et du fluor ou du silicium et du chlore est SiCl₄ ou SiF₄ et le gaz fluorocarboné hydrogéné est CH₃F.

5. Procédé selon l'une quelconque des revendications 1 à 4, dans lequel le matériau diélectrique est un nitrure de silicium (SiₓN_{y}) et dans lequel le plasma de gravure est généré dans une chambre d'un réacteur de gravure ionique réactive dans les conditions suivantes :
- un débit de SiCl₄ ou SiF₄ entrant dans la chambre du réacteur compris entre 2 sccm et 5 sccm ;
- un débit de O₂ entrant dans la chambre du réacteur compris entre 40 sccm et 250 sccm ;
- un débit de CH₃F entrant dans la chambre du réacteur compris entre 40 sccm et 250 sccm ;
- une puissance émise par une source du réacteur comprise entre 100 W et 1000 W ;
- une tension de polarisation comprise entre -200 V et -500 V ;
- une pression dans la chambre du réacteur comprise entre 6,666 Pa et 19,998 Pa ; et
- une température de porte-substrat comprise entre 20 °C et 100 °C ;
- une température des parois de la chambre du réacteur comprise entre 50 °C et 80 °C.

6. Procédé selon l'une quelconque des revendications 1 à 5, comprenant en outre, après l'étape (S13) de gravure de la couche métallique (10), une étape (S14) de retrait sélectif de la couche sacrificielle (11).

7. Procédé selon l'une quelconque des revendications 1 à 5, dans lequel la couche sacrificielle (11) est entièrement consommée lors de l'étape de gravure de la couche métallique (10).

8. Procédé selon l'une quelconque des revendications 1 à 7, dans lequel la couche sacrificielle (11) présente après l'étape (S2) d'exposition au plasma de gravure une rugosité de surface, exprimée en valeur moyenne quadratique, supérieure ou égale à 10 nm, et de préférence comprise entre 10 nm et 30 nm.

9. Procédé selon l'une quelconque des revendications 1 à 8, dans lequel la couche métallique (10) présente initialement une rugosité de surface, exprimée en valeur moyenne quadratique, strictement inférieure à 1 nm.

10. Procédé selon l'une quelconque des revendications 1 à 9, dans lequel la couche métallique (10) est gravée au moyen d'un procédé de gravure ayant une sélectivité par rapport à la couche sacrificielle (11) comprise entre 1 et 2.

11. Procédé selon l'une quelconque des revendications 1 à 9, dans lequel la couche métallique (10) est gravée au moyen d'un procédé de gravure ayant une sélectivité par rapport à la couche sacrificielle (11) strictement supérieure à 2.

12. Procédé de fabrication d'une cellule mémoire résistive comprenant une première électrode (210), une deuxième électrode (230) et une couche résistive (220) disposée entre les première et deuxième électrodes, le procédé comprenant les étapes suivantes :
- déposer (S21) une première couche métallique (21) sur un substrat ;
- augmenter la rugosité de la première couche métallique (21) au moyen d'un procédé selon l'une quelconque des revendications 1 à 11 ;
- déposer (S22) une couche de matériau à résistance électrique variable (22) sur la première couche métallique (21) et une deuxième couche métallique (23) sur la couche de matériau à résistance électrique variable ;
- graver (S23) la première couche métallique (21), la couche de matériau à résistance électrique variable (22) et la deuxième couche métallique (23), de façon à délimiter respectivement la première électrode (210), la couche résistive (220) et la deuxième électrode de la cellule mémoire résistive (230).

13. Procédé de formation d'un via (300) s'étendant jusqu'à une couche barrière métallique (303), le procédé comprenant les étapes suivantes :
- déposer (S31) une première couche diélectrique (302a) sur la couche barrière métallique (303), la première couche diélectrique étant constituée d'un matériau comprenant de l'azote ;
- déposer (S31) une deuxième couche diélectrique (302b) sur la première couche diélectrique (302a) ;
- former (S31) dans la deuxième couche diélectrique (302b) une cavité (304) débouchant sur la première couche diélectrique (302a) ;
- exposer (S32) au fond de la cavité (304) une surface de la première couche diélectrique (302a) à un plasma de gravure de façon à créer des aspérités (12), le plasma de gravure étant formé à partir d'un mélange de gaz réactifs comprenant un gaz contenant de l'oxygène, un gaz contenant du silicium et du fluor ou du silicium et du chlore et un gaz fluorocarboné (CₓF_{y}) ;
- graver (S32) la couche barrière métallique (303) à travers la première couche diélectrique (302a), de façon à transférer les aspérités (12) de la première couche diélectrique dans une partie au moins de la couche barrière métallique ; et
- remplir (S33) la cavité d'au moins un métal.

## Patentansprüche

1. Verfahren zum Erhöhen der Oberflächenrauheit einer Metallschicht (10), das die folgenden Schritte umfasst:
- Aufbringen (S11) einer Opferschicht (11) aus einem Stickstoff enthaltenden dielektrischen Material auf die Metallschicht (10);
- Aussetzen (S12) einer Oberfläche der Opferschicht (11) einem Ätzplasma, um Unebenheiten (12) zu erzeugen, wobei das Ätzplasma aus einer Mischung von reaktiven Gasen gebildet wird, die ein sauerstoffhaltiges Gas, ein Silizium und Fluor oder Silizium und Chlor enthaltendes Gas und ein Fluorkohlenstoffgas (CₓF_{y}) umfasst;
- Ätzen (S13) der Metallschicht (10) durch die Opferschicht (11), so dass die Unebenheiten (12) der Opferschicht in mindestens einen Teil der Metallschicht übertragen werden.

2. Verfahren nach Anspruch 1, bei dem die Unebenheiten (12) vorstehende Muster sind, die eine zufällige Form haben und ungleichmäßig über die Oberfläche der Opferschicht (11) verteilt sind.

3. Verfahren nach einem der Ansprüche 1 oder 2, bei dem das stickstoffhaltige dielektrische Material aus Siliziumnitrid (SiₓN_{y}), Silizium-Carbonitrid (SiCN) und Bor-Silizium-Carbonitrid (SiBCN) ausgewählt ist.

4. Verfahren nach einem der Ansprüche 1 bis 3, bei dem das sauerstoffhaltige Gas O₂ ist, das silizium- und fluorhaltige oder silizium- und chlorhaltige Gas SiCl₄ oder SiF₄ ist und das hydrierte Fluorkohlenstoffgas CH₃F ist.

5. Verfahren nach einem der Ansprüche 1 bis 4, bei dem das dielektrische Material Siliziumnitrid (SiₓN_{y}) ist und das Ätzplasma in einer Kammer eines Reaktors für reaktives lonenätzen unter den folgenden Bedingungen erzeugt wird:
- eine in die Reaktorkammer einfließende Durchflussrate von SiCl₄ oder SiF₄ zwischen 2 sccm und 5 sccm;
- eine in die Reaktorkammer einfließende Durchflussrate von O₂ zwischen 40 sccm und 250 sccm;
- eine in die Reaktorkammer einfließende Durchflussrate von CH₃F zwischen 40 sccm und 250 sccm;
- eine von einer Quelle des Reaktors abgegebene Leistung zwischen 100 Wund 1000 W;
- eine Vorspannung zwischen -200 V und -500 V;
- einen Druck in der Reaktorkammer zwischen 6,666 Pa und 19,998 Pa; und
- eine Temperatur des Substratträgers zwischen 20°C und 100°C;
- eine Temperatur der Wände der Reaktorkammer zwischen 50°C und 80°C.

6. Verfahren nach einem der Ansprüche 1 bis 5, das nach dem Schritt (S13) des Ätzens der Metallschicht (10) außerdem einen Schritt (S14) des selektiven Entfernens der Opferschicht (11) umfasst.

7. Verfahren nach einem der Ansprüche 1 bis 5, bei dem die Opferschicht (11) während des Schritts des Ätzens der Metallschicht (10) vollständig verbraucht wird.

8. Verfahren nach einem der Ansprüche 1 bis 7, bei dem die Opferschicht (11) nach dem Schritt (S2) des Aussetzens gegenüber dem Ätzplasma eine Oberflächenrauheit, ausgedrückt als quadratischer Mittelwert, von größer oder gleich 10 nm, vorzugsweise zwischen 10 nm und 30 nm, aufweist.

9. Verfahren nach einem der Ansprüche 1 bis 8, bei dem die Metallschicht (10) anfänglich eine Oberflächenrauheit, ausgedrückt als quadratischer Mittelwert, von strikt weniger als 1 nm aufweist.

10. Verfahren nach einem der Ansprüche 1 bis 9, bei dem die Metallschicht (10) mittels eines Ätzverfahrens mit einer Selektivität in Bezug auf die Opferschicht (11) zwischen 1 und 2 geätzt wird.

11. Verfahren nach einem der Ansprüche 1 bis 9, bei dem die Metallschicht (10) mittels eines Ätzverfahrens geätzt wird, das eine Selektivität in Bezug auf die Opferschicht (11) aufweist, die strikt größer als 2 ist.

12. Verfahren zur Herstellung einer Widerstandsspeicherzelle mit einer ersten Elektrode (210), einer zweiten Elektrode (230) und einer Widerstandsschicht (220), die zwischen der ersten und der zweiten Elektrode angeordnet ist, wobei das Verfahren die folgenden Schritte umfasst:
- Aufbringen (S21) einer ersten Metallschicht (21) auf einem Substrat;
- Erhöhen der Rauheit der ersten Metallschicht (21) mithilfe eines Verfahrens nach einem der Ansprüche 1 bis 11;
- Aufbringen (S22) einer Schicht aus Material mit variablem elektrischen Widerstand (22) auf die erste Metallschicht (21) und einer zweiten Metallschicht (23) auf die Schicht aus Material mit variablem elektrischen Widerstand;
- Ätzen (S23) der ersten Metallschicht (21), der Schicht aus Material mit variablem elektrischen Widerstand (22) und der zweiten Metallschicht (23), um so die erste Elektrode (210), die Widerstandsschicht (220) bzw. die zweite Elektrode der Widerstandsspeicherzelle (230) abzugrenzen.

13. Verfahren zur Bildung einer Gitterlücke (300), die sich bis zu einer metallischen Sperrschicht (303) erstreckt, wobei das Verfahren die folgenden Schritte umfasst:
- Aufbringen (S31) einer ersten dielektrischen Schicht (302a) auf die metallische Sperrschicht (303), wobei die erste dielektrische Schicht aus einem Material besteht, das Stickstoff enthält;
- Aufbringen (S31) einer zweiten dielektrischen Schicht (302b) auf die erste dielektrische Schicht (302a);
- Bilden (S31) eines Hohlraums (304) in der zweiten dielektrischen Schicht (302b), der sich in die erste dielektrische Schicht (302a) öffnet;
- Aussetzen (S32) einer Oberfläche der ersten dielektrischen Schicht (302a) am Boden des Hohlraums (304) einem Ätzplasma, um Unebenheiten (12) zu erzeugen, wobei das Ätzplasma aus einer Mischung von reaktiven Gasen gebildet wird, die ein sauerstoffhaltiges Gas, ein Silizium und Fluor oder Silizium und Chlor enthaltendes Gas und ein Fluorkohlenstoffgas (CₓF_{y}) umfasst;
- Ätzen (S32) der metallischen Sperrschicht (303) durch die erste dielektrische Schicht (302a), so dass die Unebenheiten (12) der ersten dielektrischen Schicht in mindestens einen Teil der metallischen Sperrschicht übertragen werden; und
- Füllen (S33) des Hohlraums mit mindestens einem Metall.

## Claims

1. Method for increasing the surface roughness of a metal layer (10), comprising the following steps:
- depositing (S11) on the metal layer (10) a sacrificial layer (11) made of a dielectric material comprising nitrogen;
- exposing (S12) a surface of the sacrificial layer (11) to an etching plasma so as to create asperities (12), the etching plasma being formed from a mixture of reactive gases comprising a gas containing oxygen, a gas containing silicon and fluorine or silicon and chlorine and a fluorocarbon gas (CₓF_{y});
- etching (S13) the metal layer (10) through the sacrificial layer (11), so as to transfer the asperities (12) of the sacrificial layer into a part at least of the metal layer.

2. Method according to claim 1, wherein the asperities (12) are projecting patterns having a random shape and distributed in a non-uniform manner on the surface of the sacrificial layer (11).

3. Method according to one of claims 1 and 2, wherein the dielectric material comprising nitrogen is selected from among silicon nitrides (SiₓN_{y}), silicon carbonitride (SiCN) and silicon boron carbonitride (SiBCN).

4. Method according to any of claims 1 to 3, wherein the gas containing oxygen is O₂, the gas containing silicon and fluorine or silicon and chlorine is SiCl₄ or SiF₄ and the hydrogenated fluorocarbon gas is CH₃F.

5. Method according to any of claims 1 to 4, wherein the dielectric material is a silicon nitride (SiₓN_{y}) and wherein the etching plasma is generated in a chamber of a reactive ion etching reactor in the following conditions:
- a flow rate of SiCl₄ or SiF₄ entering into the chamber of the reactor comprised between 2 sccm and 5 sccm;
- a flow rate of O₂ entering into the chamber of the reactor comprised between 40 sccm and 250 sccm;
- a flow rate of CH₃F entering into the chamber of the reactor comprised between 40 sccm and 250 sccm;
- a power emitted by a source of the reactor comprised between 100 W and 1000 W;
- a bias voltage comprised between -200 V and -500 V;
- a pressure in the chamber of the reactor comprised between 6.666 Pa and 19.998 Pa; and
- a temperature of substrate holder comprised between 20 °C and 100 °C;
- a temperature of the walls of the chamber of the reactor comprised between 50 °C and 80 °C.

6. Method according to any of claims 1 to 5, further comprising, after step (S13) of etching of the metal layer (10), a step (S14) of selective removal of the sacrificial layer (11).

7. Method according to any of claims 1 to 5, wherein the sacrificial layer (11) is entirely consumed during the step of etching of the metal layer (10).

8. Method according to any of claims 1 to 7, wherein the sacrificial layer (11) has, after the step (S2) of exposure to the etching plasma, a surface roughness, expressed in root mean square value, greater than or equal to 10 nm, and preferably comprised between 10 nm and 30 nm.

9. Method according to any of claims 1 to 8, wherein the metal layer (10) initially has a surface roughness, expressed in root mean square value, strictly less than 1 nm.

10. Method according to any of claims 1 to 9, wherein the metal layer (10) is etched by means of an etching method having a selectivity with respect to the sacrificial layer (11) comprised between 1 and 2.

11. Method according to any of claims 1 to 9, wherein the metal layer (10) is etched by means of an etching method having a selectivity with respect to the sacrificial layer (11) strictly greater than 2.

12. Method for manufacturing a resistive random access memory cell comprising a first electrode (210), a second electrode (230) and a resistive layer (220) arranged between the first and second electrodes, the method comprising the following steps:
- depositing (S21) a first metal layer (21) on a substrate;
- increasing the roughness of the first metal layer (21) by means of a method according to any of claims 1 to 11;
- depositing (S22) a layer of material with variable electrical resistance (22) on the first metal layer (21) and a second metal layer (23) on the layer of material with variable electrical resistance;
- etching (S23) the first metal layer (21), the layer of material with variable electrical resistance (22) and the second metal layer (23), so as to delimit respectively the first electrode (210), the resistive layer (220) and the second electrode of the resistive random access memory cell (230).

13. Method for forming a via (300) extending up to a metal barrier layer (303), the method comprising the following steps:
- depositing (S31) a first dielectric layer (302a) on the metal barrier layer (303), the first dielectric layer being comprised of a material comprising nitrogen;
- depositing (S31) a second dielectric layer (302b) on the first dielectric layer (302a);
- forming (S31) in the second dielectric layer (302b) a cavity (304) leading into the first dielectric layer (302a);
- exposing (S32) at the bottom of the cavity (304) a surface of the first dielectric layer (302a) to an etching plasma so as to create asperities (12), the etching plasma being formed from a mixture of reactive gases comprising a gas containing oxygen, a gas containing silicon and fluorine or silicon and chlorine and a fluorocarbon gas (CₓF_{y});
- etching (S32) the metal barrier layer (303) through the first dielectric layer (302a), so as to transfer the asperities (12) of the first dielectric layer into a part at least of the metal barrier layer; and
- filling (S33) the cavity with at least one metal.
